# EUROPEAN PATENT APPLICATION

(11) **EP 2 618 566 A1**
(43) Date of publication of application: **24.07.2013**
(21) Application number: 12152082.9
(22) Date of filing: 23.01.2012
(51) Int. Cl.: H04N 7/18, G01S 3/786, H04N 5/232, G08B 13/24

(54) **Controlling controllable device during performance**

(71) Applicant: FilmMe Group Oy, 90590 Oulu (FI)
(72) Inventor: Koivukangas, Tapio, 90590 Oulu (FI); Salovaara, Lauri, 90590 Oulu (FI)
(74) Representative: Karppinen, Olavi Arto

(57) **Abstract**

The at least one node (106, 108, 110) and a trackable tag (104) perform communication with each other. The tag (104) is associated with a person (112) belonging to a performance in a predetermined field (114). A place of each controllable device (102) is known. The controller (100) receives position data of the trackable tag (104) and controls at least one controllable device (102) to direct with respect to the tag (104) on the basis of the position data and the place of the at least one controllable device (102) for causing an audio and/or optical operation associated with the performance to take place by the at least one controllable device (102).

## Description

### Field

The invention relates to control of a controllable device during performance.

### Background

When a person is performing, his/her performance may be captured in a video. The performing person may be an actor, a sportsman, a rider, a politian etc. Because the person may move sideways and back and forth with respect to the camera, a cameraman is needed to use the proper camera. The cameraman or a director may additionally be used to select a proper camera for capturing. The cameraman operates all functions of the camera such that the performance is properly captured irrespective of the direction of the movement and the distance of the performing person.

However, a skillful cameraman or generally a cameraman may be difficult have when particularly needed. Additionally, the available cameraman and the potential director may capture a performance in an undesirable way. Moreover, the video professionals increase the cost of the capture of the performance. Hence, there is a need for simplifying the capture of a performance.

### Summary

The following presents a simplified summary of the invention in order to provide a basic understanding of some aspects of the invention. Its purpose is to present some concepts of the invention in a simplified form as a prelude to the more detailed description that is presented later.

An aspect of the invention relates to a system of claim 1.

An aspect of the invention relates to a trackable means of claim 9. An aspect of the invention relates to a method of claim 13.

An aspect of the invention relates to a computer program product of claim 14.

An aspect of the invention relates to apparatus of claim 15.

Although the various aspects, embodiments and features of the invention are recited independently, it should be appreciated that all combinations of the various aspects, embodiments and features of the invention are possible and within the scope of the present invention as claimed.

The present solution provides advantages. When the camera or other controllable device is automatically controlled, no particular person steering the controllable device is needed and the controllable device is always directed similarly and/or in a predictable way with respect to the performance.

### Brief description of the drawings

In the following the invention will be described in greater detail by means of exemplary embodiments with reference to the attached drawings, in which
Figure 1 shows a basic configuration of the system;
Figure 2 shows a principle of determining the position of a trackable tag;
Figure 3 shows a principle of determining the position on the basis of time-of-flight;
Figure 4 shows a mechanism for the controllable device;
Figure 5 shows a principle of calibration;
Figure 6 shows a block diagram of the system;
Figure 7 shows a block diagram of the trackable device; and
Figure 8 shows a flow chart of the method.

### Description of embodiments

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

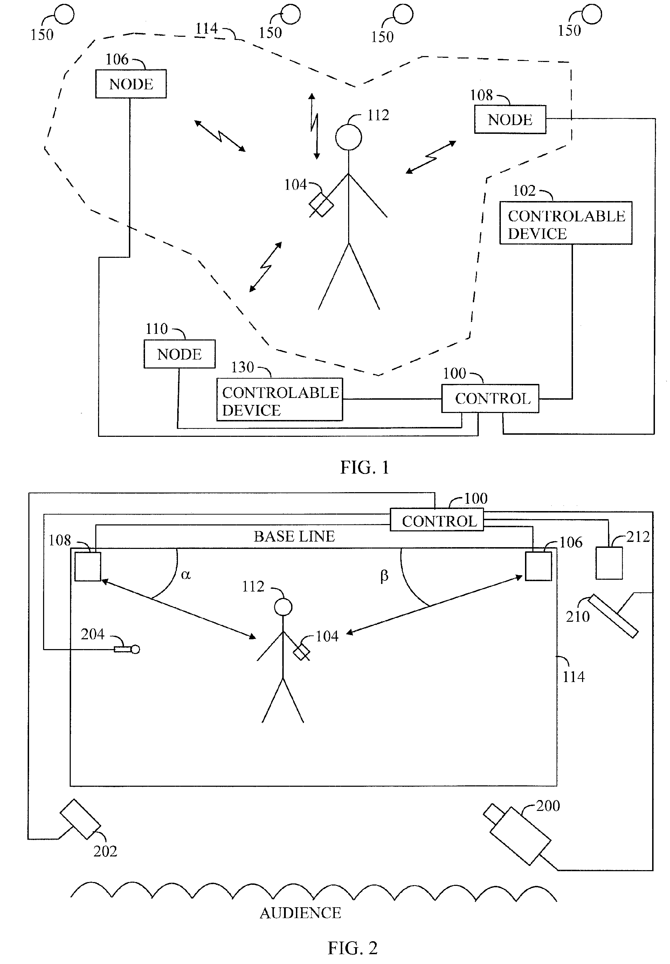

Figure 1 presents a system for directing a controllable device. The system comprises a controller 100, one or more controllable audio and/or optical device 102, a trackable tag 104 and at least one fixed node 106, 108, 110. In an embodiment, at least two fixed nodes 106, 108, 110 are used to determine the position of the tractable tag 104 and this embodiment is described below.

In Figure 1 there are three fixed nodes 106, 108, 110 but two nodes may also be enough to perform a positioning measurement. The controller 100 may be a computer having a processor, memory and a suitable computer program. A controllable device 102 may be a camera for capturing still images or video, a microphone for capturing sound, or a light source for illumination the performance. In video, still images are processed in a sequence during electronically capturing, recording, storing, transmitting, and/or reconstructing a scene in motion. Generally, the number of the controllable devices 102 may be one or more.

The camera 200 may in general comprise any matrix of a plurality of transducers which converts an optical image into an electric form. In a camera, the image is formed on the matrix using optical components such as lenses. The pixels i.e. separate transducers in the matrix may comprise semiconductor elements. The camera may be based on a CCD (Charge Coupled Device) or a CMOS (Complementary Metal-Oxide Semiconductor) technology. The electric signal output by the camera may be in analog or digital form. An analog signal in a camera may be converted into a digital signal by an analog-digital converter.

A microphone 204 may in general be any transducer converting an acoustic signal into an electric form. The microphone may comprise a crystal microphone where an electrical property over the crystal varies according to the pressure changes of the sound. The microphone may comprise a dynamic microphone providing inductively electric current resembling pressure changes of the sound. The microphone may comprise a ribbon microphone which also provides an electric current inductively. The microphone may comprise a condenser microphone where a capacitance of a capacitor varies according to the pressure changes of the sound. The microphone may comprise a traditional carbon dust microphone providing resistance changes as a function of sound vibrations. However, the microphone is not limited to these. The electric signal output by the microphone may be in analog or digital form. An analog signal in a microphone may be converted into a digital signal by an analog-digital converter.

A light source 202 may be a lamp which may comprise incandescent lamp, electron stimulated lamp, gas discharge lamp, electroluminescent lamp, high-intensity discharge lamp, their combination or the like. However, the light source is not limited to these. In an embodiment, an angle of the cone of a beam of light may be limited in a desired extent. Often the light source directs its light in a small cone to a person 112 such that the person 112 and a limited environment around the person 112 is in light. The cone of the light may also be controllable by an adjustable aperture. The adjustable aperture may be an opening in a non-transparent material. Additionally, the aperture may include a lens or lenses and a mechanism for widening and narrowing the aperture and potentially moving the at least one lens. The light source may be a stage light.

A place of each controllable device 102 is assumed known. They may be put on the floor, wall, roof, ground or the like at a fixed position.

The trackable tag 104 is associated with a person 112 belonging to a performance in a predetermined field 114. The field may be a stage, a stadium, a velodrome, a horse track or the like. The tag 104 may be rather small and it may have a wrist strap or the like for attaching the tag 104 to the person 112. The tag 104 may also have a strap for attaching the tag 104 around the chest. If the person 112 is riding a horse or bike for example, the tag 104 may be attached to the horse or the saddle or the bike.

The trackable tag 104 and the at least two fixed nodes 106, 108, 110 perform electromagnetic radio frequency (RF) communication with each other. In an embodiment, the trackable tag 104 may have a transmitter transmitting an RF signal. Alternatively or additionally, the tag 104 may have a receiver receiving the RF signal.

The transmitter may be based on CSS (Chirp Spread Spectrum) technology such that the frequency of the RF signal may be varied in a predetermined manner. The distance between a trackable tag 104 and a fixed node 106, 108, 110 may be determined on the basis of the frequency of a received signal at one or more moments of reception. The distance between a trackable tag 104 and a fixed node 106, 108, 110 may be determined in a manner correspondingly used in a radar system, for example.

Alternatively or additionally, the communication between the trackable tag 104 and the at least two fixed nodes 106, 108, 110 may be performed using optical radiation or ultrasound, for example. The measurement principle is similar to that of electromagnetic RF communication.

In an embodiment, time-of-flight of the RF signal may be more directly determined. The time-of-flight refers to the time for a signal to travel the distance between the trackable tag 104 and each fixed node 106, 108, 110 which are used in the measurement. The error in the distance may a meter or less, for example. In the case there is some obstacle between a fixed node and the trackable tag 104 preventing a line-of-sight measurement one or more previous measurements may be used to estimate the present position of the trackable tag 104. In the estimate the trackable tag 104 may be assumed to remain in the same distance. It is also possible that a movement of the trackable tag 104 is estimated on the basis of the latest distance measurements, and the movement of the trackable tag 104 may be assumed to continue according to the estimate. Hence, the position of the trackable tag 104 may remain rather accurate for a while even without successful measurements.

In an embodiment, the position of the trackable tag 104 may be determined on the basis of a satellite positioning system instead of or in addition to a plurality of fixed nodes 106, 108, 110. The number of the fixed nodes 106, 108, 110 may in this embodiment be as low as one. However, a fixed node 106, 108, 110 is needed for the communication to be carried out between the controller 100 and the trackable tag 104. The only node 106, 108, 110 may then be placed in the frame of the controller 100, for instance. Examples of satellite positioning systems are GPS (Global Positioning system), the Russian GLONASS (Globalnaya navigatsionnaya sputnikovaya sistema, Global Navigation Satellite System) and the European Galileo, for example. In an embodiment, the trackable tag 104 comprises a receiver 708 for receiving radio signals from satellites 150 of the satellite positioning system and the trackable tag 104 determines its location. Then the trackable tag 104 may transmit the location information through the at least one fixed node 106, 108, 110 to the controller 100. Alternatively, the trackable tag 104 may transmit the information of the received satellite signals to the controller 100 which determines the location of the trackable tag 104.

The at least two fixed nodes 106, 108, 110 are placed in predetermined positions. The positions may move but when the position of the trackable tag 104 is measured using the fixed nodes 106, 108, 110 their positions must be known. If a satellite positioning system is used, the at least one fixed node is needed and its position may be unknown.

In an embodiment, each of the nodes 106, 108, 110 may have an RF receiver for detecting the RF signal transmitted by the trackable tag 104. Alternatively or additionally, each node 106, 108, 110 may have a transmitter for transmitting an RF signal which may comprise a chirp signal for measuring the location of the trackable tag 104. The RF signal transmitted by the nodes 106, 108, 110 may be received by the trackable tag 104.

Figure 2 shows an example where a person 112 on a stage. In a triangulation principle it is enough to know three properties of the triangle. For example, it is enough to know one side of a triangle and two of its angles to determine the rest of the sides and the last angle of the triangle. On the stage, the base line may be the distance of the fixed nodes 106, 108. The angles α, β may be determined on the basis of the reception angles at or from the fixed nodes 106, 108. The nodes 106, 108 may be transmitters and the trackable tag 104 may be a receiver or vice versa. As the triangle may be fully determined by these three measurements, also the position of the trackable tag 104 may be determined on the stage.

As a result, if a reception direction of a line-of-sight RF signal may be determined using at least two fixed nodes 106, 108, 110, the position of the trackable tag 104 may also be determined.

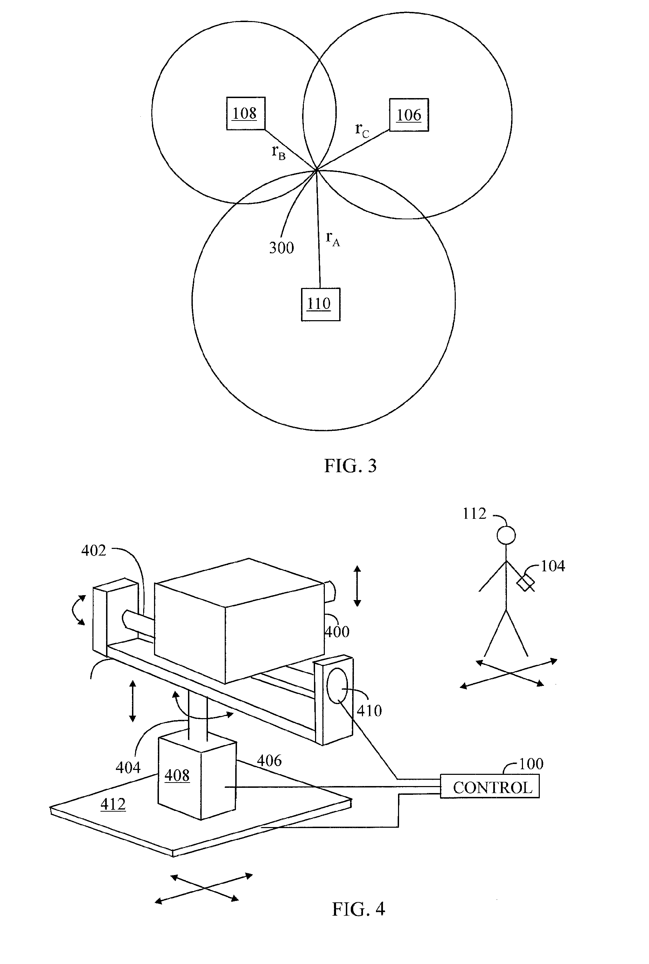

Figure 3 show a case where the measurement is based on time-of-flight without a determination of reception angle. Then at least three fixed nodes 106, 108, 110 are usually needed. A distance from a fixed node 106, 108, 110 may be drawn as a circle because time to fly between the trackable tag 104 and a node 106, 108, 110 determines a distance therebetween. The distance between the trackable tag 104 and the fixed node 110 may be marked as a radius r_{A}. The distance between the trackable tag 104 and the fixed node 108 may be marked as a radius r_{B}. The distance between the trackable tag 104 and the fixed node 106 may be marked as a radius r_{C}. Two circles may cross each other in two different places. Three circles in this kind of measurement cross each other only in one common point 300 which is the position of the trackable tag 104. As a result, if a distance of a line-of-sight RF signal transmitted by the trackable tag 104 may be determined using at least three fixed nodes 106, 108, 110, the position of the trackable tag 104 may also be determined.

In an embodiment, the trackable tag 104 may comprise a processor, memory and a suitable computer program for computing its position on the basis of the measurements of the RF signals it receives. Then the trackable tag 104 may transmit the computed position information to the controller 100 through at least one of the fixed nodes 106, 108, 110 since the fixed nodes 106, 108, 110 may be operationally coupled with the controller 100. Alternatively, the trackable tag 104 may transmit the computed position information directly to the controller 100 or through a separate base station 120.

In an embodiment, the trackable tag 104 may transmit measurement information on the RF signals to the controller 100 through at least one of the fixed node 106, 108, 110. Alternatively, the trackable tag 104 may transmit the measurement information on the RF signals directly to the controller 100 or through a separate base station 120. Then the controller 100 computes the position of the trackable tag 104 on the basis of the measurement information.

In an embodiment, the fixed nodes 106, 108, 110 may receive RF signals from the trackable tag 104. The fixed nodes 106, 108, 110 may measure the direction, the strength, phase, and/or frequency of the signals. Then the controller 100 may compute the position of the trackable tag 104 on the basis of the measurements of the RF signals. Alternatively, the nodes 106, 108, 110 may pass signals corresponding to the received signals to the controller 100 for a measurement of their parameters such as time-of-flight and for determination of the position of the trackable tag 104. The time-of-flight may be based on a phase and/or frequency comparison but is not limited to the technology.

The controller 100 directs at least one controllable device 102 of the one or more controllable devices 102 with respect to the trackable tag 104 on the basis of the determined position of the trackable tag 104 and the place of the at least one controllable means 102 for causing an audio and/or optical operation associated with the performance to take place by the at least one controllable device 102.

For controlling a controllable device 102 the controller 100 may output a command which includes information on the position of the trackable tag 104. Alternatively or additionally, the controller 100 may form and output a command which includes information on a positional difference between the previous position and the present position of the trackable tag 104. The control may be steering. The steering may include a tilt, pan and/or zoom of a camera, for example. The pan and tilt may be applicable to a microphone and a light source.

Figure 4 shows a principle of a movement mechanism. The actual realization of the movement mechanism may vary. The mechanism of a camera 200 may have a horizontal axle 402 to which a camera unit 400, which comprises the optics and the detecting matrix, is attached. The horizontal axle 402 may rotate to change tilting of the camera unit 400. The axle 402 with the camera unit 400 may be fit with a bearing to a carrier 404 which may be attached on the top of a vertical axle 406. The vertical axle 406 may rotate to change panning of the camera unit 400. The horizontal axle 402 may be rotated by an actuator 408 which may be an electric motor, for example. The actuator 408 receives its command to rotate the axle 406 from the controller 100. The vertical axle 406 may be rotated by an actuator 410 which may be an electric motor, for example. The actuator 410 receives its command to rotate the axle 402 from the controller 100. When a person 112 is moving the camera unit 400 can follow the person by tilting and panning according to the commands from the controller 100. Additionally, the mechanism may have a base structure 412 which may move back and forth and/or sideways for moving the camera unit 400 in a linear direction. Moreover, the base structure 412 may also move the camera unit 400 vertically so that the camera unit 400 may be transferred up or down. The controller 100 may control the linear movement. The performing person 112 may input the commands for the controller 100 how to move the base structure may in the user interface of the trackable tag 104.

Instead of the camera 400, a microphone unit or a light source unit may be attached to similar mechanism. Then the microphone unit or the light source unit may be attached to axle 402. Hence, also a microphone 204 and/or a light source 202 may turn towards the performance as the performing person 112 moves.

In an embodiment, there is a plurality of controllable devices 102, 130 in use. All of them may be directed to follow the trackable tag 104. In this way many cameras may be directed to follow the trackable tag 104. In general, a plurality of cameras, microphones and light sources together may be directed to follow the trackable tag 104.

When a controllable device 102, 130 is directed with respect to the trackable tag 104 to follow the trackable tag 104, the controllable device 102, 130 may be directed directly towards the trackable tag 104 i.e. along line-of-sight between the trackable tag 104 and the controllable device 102, 130 or the controllable device 102, 130 may be directed to a direction deviating from a direct direction by a desired manner. The deviation may be useful when the trackable tag 104 is not in the center of solid angle of the controllable device 102, 130, the solid angle being the viewing angle of a camera 200, a reception angle of a microphone 204 or a transmission angle of a light source 202.

In an embodiment, a camera 200 may be operationally coupled with at least one screen 210 for showing the performance in and/or around the field of the performance as shown in Figure 2. The performing person 112, audience and/or spectators may thus see the performance live. Similarly, a microphone 204 may be operationally coupled with at least one loudspeaker 212 for repeating the sounds of the performance in and/or around the field of the performance.

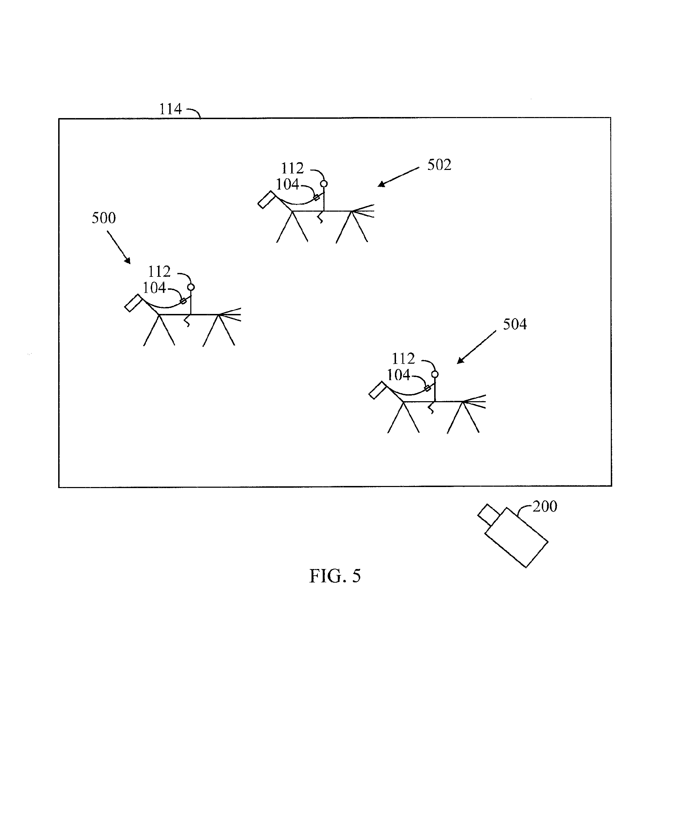

Figure 5 shows a calibration principle for the controllable device 102. Assume now that the controllable device is a camera and the performance is related to equestrianism which may include different kinds of horse racing competitions and shows. Examples of these are dressage, show jumping, eventing, endurance riding, equestrian vaulting and western riding. Zooming of the camera 200 may be set to have a certain value when the person 112 with the horse is at predetermined positions 500, 502, 504 on the field 114. An important factor affecting the zooming power is the distance between the person 112 and the camera 200. When a suitable zooming power as a function of position or distance is preset for the camera 200 in the calibration phase, the zooming power may be controlled on the basis of the determined position of the tag 104 and the place of the camera 200 during an actual performance after the calibration for causing an image capturing operation of the performance to take place by the camera 200. The preset zooming powers as a function of position may be saved in a memory of the controller 100 or the camera 200. With the zooming, also the focus of the camera 200 may be preset for different positions of the performing person 112.

In a similar manner, the amplification strength of a microphone 204 may be preset as a function of a position of the performing person 112 according to an embodiment. The preset amplification powers as a function of position may be saved in a memory of the controller 100 or the microphone 204.

Further in a similar manner, the solid angle into which the light source 202 transmits light may be preset to different predetermined values as a function of a position of the performing person 112 according to an embodiment. The preset settings of the apertures providing the solid angles as a function of position may be saved in a memory of the controller 100 or the light source 202.

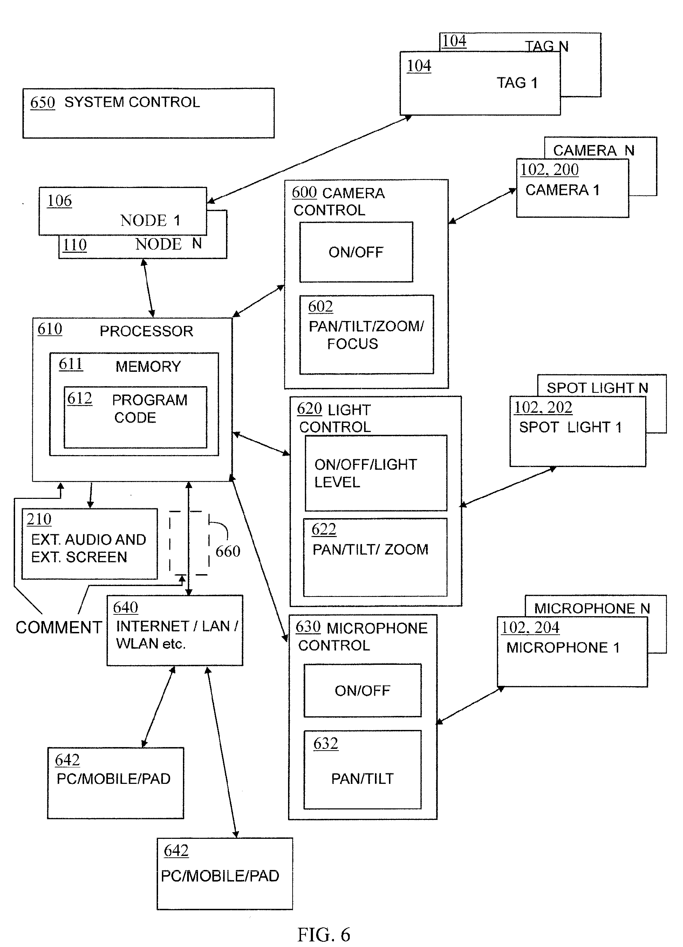

Figure 6 shows a block chart of the system. A basic system comprises two to three fixed nodes 106, 108, 110, at least one camera 200 and potentially at least one microphone 204 and at least one light source 202. Each of the at least one camera 200 may comprise a control circuitry 600 for switching on and off the camera(s) 200. Furthermore, the control circuitry 600 may control the pan, tilt, zoom, focus and/or any other function of the camera 200. The camera 200 may also have a mechanism 602 for the pan and tilt which is described in Figure 4.

The controller 100 comprises a processor 610, memory 611 and a suitable computer program 612. The controller 100 may select a controllable device when more than one similar controllable device is available. The selection may mean a switch on and a start of a direction process. For example, a suitable camera from a plurality of cameras may be selected on the basis of the position of the trackable tag. The controller 100 may also deselect a controllable device. Then the controllable device may be commanded to switch off and no commands to direct to any direction are sent to the controllable device. The controller 100 may operationally be coupled with the system controller 650 which enables a manual or automatic control of any part of the system.

Each at least one light source 202 may comprise a control circuitry 620 for switching on and off the light source(s) 200. In general, the control circuitry 620 may control any function of the at least one light source such as blinking etc. Furthermore, the control circuitry 620 may control the pan and tilt of the light source 202. Additionally, the control circuit 620 may control the solid angle of the cone of light from the light source 202. The light source 202 may also have a mechanism 622 for the pan and tilt which is described in Figure 4.

Each least one microphone 204 may comprise a control circuitry 630 for switching on and off the microphone(s) 204. Furthermore, the control circuitry 630 may control the pan and tilt of the microphone 204. Additionally, the control circuit 630 may control the solid angle of reception of the microphone 204.The microphone 204 may also have a mechanism 632 for the pan and tilt which is described in Figure 4.

In an embodiment, a controllable device 102, 200, 202, 204 is operationally coupled with a network 640 for delivering the performance to external devices 642. The network 640 may comprise the Internet, LAN (Local Access Network), WLAN (Wideband LAN), Bluetooth™ or the like. The external device may be a PC (Personal Computer), a mobile phone, a PAD (Personal Access Device) or the like.

In an embodiment, the system may receive comments, which may be spoken or written, on the captured images of the performance, combine the captured images that are commented with the comments and deliver the combination of the captured images and comments further. The images with the comments may be shown and heard on the screen 210 and from a loudspeaker 212. Additionally or alternatively, the images with the comments may be sent to the network 640.The controller 100 or a separate computer 660 may perform the task.

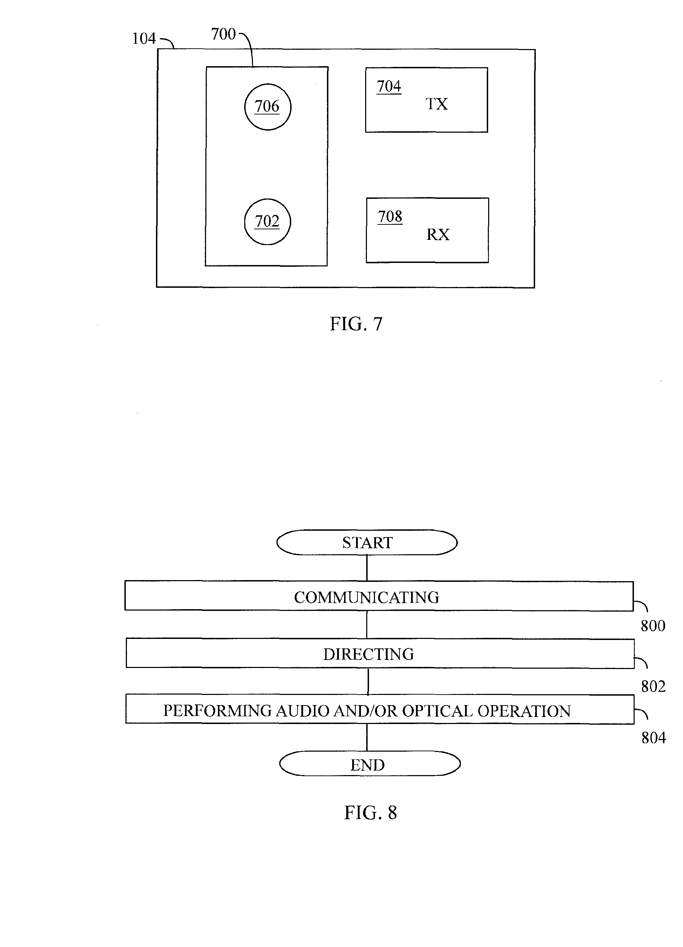

Figure 7 show a block diagram of the trackable tag 104. The trackable tag may comprise a user interface 700 which includes an electromechanism 702 which may receive a person's input for controlling the at least one controllable device 102. An electromechanism outputs an electric signal in response to mechanical touch. The electromechanism may be a touch sensitive area or a button, for example. The trackable tag 104 may comprise a receiver 108 for receiving signals from at least one node 106, 108, 110 and/or from satellites. The trackable tag 104 may also comprise a transmitter 704 for transmitting the person's input and/or other information which may be associated with signals received from satellites, for example. The person's input and/or other information may be transmitted via at least one fixed node 106, which has a receiver, to the controller 100 which may forward the input to or otherwise control the at least one controllable device 102. The input may cause a controllable device 102 to be selected and to start directing with respect to the trackable tag 104 or to stop to be selected and directed with respect to the trackable tag 104. When the electromechanism 702 is activated for the first time the input may cause the controllable device 102 to start directing with respect to the trackable tag 104. When the electromechanism 702 is activated for the second time the input may cause the controllable device 102 to stop directing with respect to the trackable tag 104, and so on. In this way, the performing person 112 may control when his/her performance is captured by the at least one camera 200 or the at least one microphone 204. Additionally, the same input may cause the light source 202 to cast light on him/her when he/she desires.

In an embodiment, the trackable tag 104 may be used to control several or all functions of the system. The trackable tag 104 may be carried by the performing person 112, the by a coach or an assistant of the coach who are associated with the performance and who are thus present. Assume now that a video is taken of show jumping when a horse is jumping over a fence. Then instead of the rider, the coach or the assistant may use the trackable tag 104 to control the capture of the video. Right after the capture, the trackable tag 104 may be used to show the video on the nearest screen. In that way, the rider may fully concentrate on the performance. The video may be stored in the database of the rider on the basis of the identity of the trackable tag 104 or some other code saved in the trackable tag 104, for example. The data base may be located in the Internet, for instance. When a video is taken of a new performing person such as a visitor, a new code may be saved in the trackable tag 104 such that his/her videos may be stored and retrieved individually in the data base.

In a similar manner, the interface 700 of the trackable tag 104 may be used to control all controllable/controllable features in the at least one camera 200, light source 202 and microphone 204.

In an embodiment, the trackable tag 104 may comprise an indicator 706 for indicating the person 112 that a camera 200 is now capturing images of him/her and/or a microphone 202 is capturing sounds associated with the performance. The indicator 706 may comprise a light emitting diode (LED) the color of which may be red when no controllable device 102 is activated with respect to the performance associated with the trackable tag 104. The LED may be green when a camera, a microphone and/or a light source is directed to the performance associated with the trackable tag 104.

There may be several performing persons who all have a trackable tag 104. In an embodiment, only one of the persons 112 may be monitored. In such a case, the persons may activate the electromechanism 702 one after another. Each time a person activates the electromechanism, he/she may be captured images of, sounds of his/her performance may be captured and/or light may be directed to him/her.

In an embodiment, there may be several controllable devices 102, 130. Then each controllable device 102, 130 may be directed to one person's performance.

In an embodiment, there may be several controllable devices 102, 130 each of which covers only a section of the performance field. Then a camera, a microphone and/or a light source specific to a certain section, where a performing person is, may be selected and controlled to direct with respect to the trackable tag in the section. The controller 100 may perform the task.

Figure 8 shows a flow chart of the method. In step 800, communication between at least one fixed means 106, 108, 110 and a tractable means 104 associated with a person 112 belonging to a performance in a predetermined field 114 is performed. In step 802, at least one controllable means 102, 130, 200, 202, 204 is directed with respect to the tractable means 104 on the basis of the position of the tractable means 104 and the place of the at least one controllable means 102, 130, 200, 202, 204, the position being based on the communication between at least one fixed means 106, 108, 110 and a tractable means 104. In step 804, an audio and/or optical operation associated with the performance is performed by the at least one controllable means 102, 130, 200, 202, 204.

The processes or methods described in this application, such as in Figure 8, may be carried out in the form of a computer process defined by a computer program. The computer program may be in source code form, object code form, or in some intermediate form, and it may be stored in a transitory or a non-transitory carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

Accordingly, the at least one processor, the memory, and the computer program code may form processing means for carrying out embodiments.

Potential implementations of the embodiments of the controller 100 and circuitries 600, 620, 630 may be a combination of processor(s) or portions of processor(s)/software including digital signal processor(s), software, and memory(ies) that work together to cause an apparatus to perform various functions and/or a microprocessor(s) or a portion of a microprocessor(s), that require software or firmware for operation, even if the software or firmware is not physically present. In an embodiment, a computing unit may comprise separate processor components such that the processes or methods are performed in the processing system comprising a plurality of processing units and a load-balancing logic for distributing processing load among the multiple processing units. In an embodiment, at least one processing unit may receive a command to start the process from an interface, for example, and another processing unit or units may perform other steps.

The controller 100 and circuitries 600, 620, 630 may comprise memories to store computer programs (software) configuring the controller and circuitries 600, 620, 630 to perform the above-described functionalities of the system. The memories may also store communication parameters and other information needed for the wireless communications. The transmitters and receivers may comprise known components such as amplifier, filter, frequency-converter, (de)modulator, and encoder/decoder circuitries and one or more antennas. The user interface 700 may comprise a display, a keypad or a keyboard, a loudspeaker, etc.

As used in this application, the term 'circuitry' refers to all of the following: (a) hardware-only circuit implementations, such as implementations in only analog and/or digital circuitry, and (b) to combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) to circuits, such as a microprocessor(s) or a portion of a microprocessor(s), that require software or firmware for operation, even if the software or firmware is not physically present.

All in all, the system and the method enable one person to create a video by oneself without any assistance using a camera which directs towards the person automatically. The camera may be switched on and off remotely. The system may have an automated video recording and sharing. The video may be shared immediately e.g. through email, Facebook or YouTube. The sharing may take place under remote control of the performing user. Light and microphone controls may utilize the same location information to control/move the light spot and the microphone. The light and microphone control may take place under remote control of the performing user. The use and control of light(s) and microphone(s) may be independent of the use and control of camera(s) but they may be operable as part of total solution as well. Camera zooming may be based on location information.

It will be obvious to a person skilled in the art that, as technology advances, the inventive concept can be implemented in various ways. The invention and its embodiments are not limited to the examples described above but may vary within the scope of the claims.

## Claims

1. A system for controlling controllable means, **characterized in that** the system comprises a controlling means (100), one or more controllable audio and/or optical means (102, 130, 200, 202, 204), a trackable means (104) and at least one fixed means (106, 108, 110), the trackable means (104) and the at least one fixed means (106, 108, 110) are configured to perform communication with each other;
the trackable means (104) is associated with a person (112) belonging to a performance in a predetermined field (114);
a place of each controllable means (102, 130, 200, 202, 204) of the one or more controllable means (102, 130, 200, 202, 204) is known; and
the controlling means (100) is configured to receive position data associated with a position of the trackable means (104) through the communication between the trackable means (104) and the at least one fixed means (106, 108, 110) and to control at least one controllable means (102, 130, 200, 202, 204) of the one or more controllable means (102,130, 200, 202, 204) to direct with respect to the trackable means (104) on the basis of the position data and the place of the at least one controllable means (102, 130, 200, 202, 204) and to cause an audio and/or optical operation associated with the performance to take place by the at least one controllable means (102, 130, 200, 202, 204).

2. The system of claim 1, **characterized in that** the system comprises at least two fixed means (106, 108, 110) placed in predetermined positions;
the controlling means (100) is configured to determine the position of the trackable means (104) on the basis of communication between the trackable means (104) and the at least two fixed means (106, 108, 110); and
the controlling means (100) is configured to control at least one controllable means (102, 130, 200, 202, 204) to direct with respect to the trackable means (104) on the basis of the determined position of the trackable means (104) and the place of the at least one controllable means (102, 130, 200, 202, 204) and to cause an audio and/or optical operation associated with the performance to take place by the at least one controllable means (102, 130, 200, 202, 204).

3. The system of claim 1, **characterized in that** the system comprises at least two fixed means (106, 108, 110) placed in predetermined positions;
the trackable means (104) is configured to determine its position on the basis of communication between the trackable means (104) and the at least two fixed means (106, 108, 110); and
the trackable means (104) is configured to transmit position data on its position to the controlling means (100).

4. The system of claim 1, **characterized in that** the trackable means (104) is configured to determine its position on the basis of signals from satellites of a satellite positioning system; and
the trackable means (104) is configured to transmit position data on its position to the controlling means (100).

5. The system of claim 1, **characterized in that** the controllable means (102, 130, 200, 202, 204) comprises one or more camera means (200);
a place of each camera means (200) of the one or more camera means (200) is known; and
the controlling means (100) is configured to direct the at least one camera means (200) with respect to the trackable means (104) on the basis of the position of the trackable means (104) and the place of the at least one camera means (200) for electronically capturing images associated with the performance.

6. The system of claim 1, **characterized in that** the controllable means (102, 130, 200, 202, 204) comprises one or more light source means (202);
a place of each light source means (202) of the one or more light source means (202) is known; and
the controlling means (100) is configured to direct at least one light source means (101) with respect to the trackable means (104) on the basis of the position of the trackable means (104) and the place of the at least one light source means (202) for illuminating the performance.

7. The system of claim 1, **characterized in that** the controllable means (102, 130, 200, 202, 204) comprises one or more microphone means (204);
a place of each microphone means (204) of the one or more microphone means (204) is known; and
the controlling means (100) is configured to direct at least one microphone means (100) with respect to the trackable means (104) on the basis of the position of the trackable means (104) and the place of the at least one microphone means (204) for capturing sound from the performance.

8. The system of claim 1, **characterized in that** a trackable means (104) comprises a user interface means (700) configured to receive a person's input and a transmitter means (704) configured to transmit the person's input, the input controlling the controllable means (102, 130, 200, 202, 204) to start directing with respect to the trackable means (104) or stop directing with respect to the trackable means (104).

9. A trackable means for controlling controllable means, **characterized in that** the trackable means (104) is associated with a person (112) belonging to a performance in a predetermined field (114), and the trackable means (104) is configured to communicate with at least one fixed means (106, 108, 110) for transmitting position data associated with a position of the trackable means (104) to a controller (100) in order to control at least one controllable means (102, 130, 200, 202, 204) of an audio and/or optical operation associated with the performance on the basis of a position of the trackable means (104) determined on the basis of the communication.

10. The trackable means of claim 9, **characterized in that** the trackable means (104) is configured to determine its position on the basis of communication between the trackable means (104) and the at least two fixed means (106, 108, 110); and
the trackable means (104) is configured to transmit position data on its position to the controlling means (100).

11. The trackable means of claim 9, **characterized in that** the trackable means (104) is configured to determine its position on the basis of signals from satellites of a satellite positioning system; and
the trackable means (104) is configured to transmit position data on its position to the controlling means (100).

12. The trackable means of claim 9, **characterized in that** the trackable means (104) comprises a user interface means (700) and a transmitter means (704); the user interface means (700) is configured to receive a person's input; and the transmitter means (704) is configured to transmit the person's input, the input being meant to control the controllable means (102, 130, 200, 202, 204) to start directing with respect to the trackable means (104) or stop directing with respect to the trackable means (104).

13. A method for controlling a controllable means, **characterized by** performing (800) communication between at least one fixed means (106, 108, 110) and a tractable means (104) associated with a person (112) belonging to a performance in a predetermined field (114);
directing (802) at least one controllable means (102, 130, 200, 202, 204) with respect to the tractable means (104) on the basis of the position of the tractable means (104) and the place of the at least one controllable means (102, 130, 200, 202, 204), the position being based on the communication between at least one fixed means 106, 108, 110 and a tractable means 104; and
performing (804) an audio and/or optical operation associated with the performance by the at least one controllable means (102, 130, 200, 202, 204).

14. A computer program product embodied on a distribution medium readable by a computer and comprising program instructions which, when loaded into an apparatus, causing a computer process perform the method steps of claim 13.

15. An apparatus comprising:
at least one processor; and
at least one memory including a computer program code, wherein the at least one memory and the computer program code are configured, with the at least one processor, to cause the apparatus at least to perform the method steps of claim 13.
